(19) Europäisches Patentamt / European Patent Office / Office européen des brevets

(11) **EP 3 623 419 B1**

(12) **EUROPEAN PATENT SPECIFICATION**

(45) Date of publication and mention
of the grant of the patent:
**07.08.2024   Bulletin 2024/32**

(21) Application number: **18797712.9**

(22) Date of filing: **20.03.2018**

(51) International Patent Classification (IPC):
**C08L 21/00** *(2006.01)*    **B60C 1/00** *(2006.01)*
**B60C 11/00** *(2006.01)*    **C08J 9/04** *(2006.01)*
**C08L 101/00** *(2006.01)*    **C08L 7/00** *(2006.01)*
**C08L 29/04** *(2006.01)*    **C08L 23/06** *(2006.01)*

(52) Cooperative Patent Classification (CPC):
(C-Sets available)
**C08L 7/00; B60C 1/00; B60C 11/00; C08J 9/04;
C08L 101/00**                                    (Cont.)

(86) International application number:
**PCT/JP2018/011154**

(87) International publication number:
**WO 2018/207472 (15.11.2018 Gazette 2018/46)**

(54) **RUBBER COMPOSITION, VULCANIZED RUBBER, TIRE, STUDLESS TIRE**

KAUTSCHUKZUSAMMENSETZUNG, VULKANISIERTER KAUTSCHUK, REIFEN, SPIKELOSER REIFEN

COMPOSITION DE CAOUTCHOUC, CAOUTCHOUC VULCANISÉ, PNEU, PNEU SANS CLOUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2017   JP 2017094134**

(43) Date of publication of application:
**18.03.2020   Bulletin 2020/12**

(73) Proprietor: **Bridgestone Corporation
Tokyo 104-8340 (JP)**

(72) Inventor: **KAWASHIMA, Masahiro
Tokyo 104-8340 (JP)**

(74) Representative: **Marks & Clerk LLP
15 Fetter Lane
London EC4A 1BW (GB)**

(56) References cited:
**JP-A- 2001 288 300       JP-A- 2007 169 813
JP-A- 2007 169 813       JP-A- 2012 219 245
JP-A- 2012 219 245       JP-A- 2017 020 125
JP-A- H05 149 331        JP-A- H1 095 874
JP-A- H1 095 874**

(52) Cooperative Patent Classification (CPC): (Cont.)

C-Sets
**C08L 7/00, C08L 9/00, C08L 23/06, C08K 3/04,
C08K 5/09, C08K 3/22, C08K 3/06, C08K 5/47,
C08K 5/3477;
C08L 7/00, C08L 9/00, C08L 23/06, C08L 29/04,
C08K 3/04, C08K 5/09, C08K 3/22, C08K 3/06,
C08K 5/47, C08K 5/3477**

C-Sets

**Description**

TECHNICAL FIELD

The present invention relates to a rubber composition, a vulcanized rubber, a tire, and a studless tire.

BACKGROUND ART

From the viewpoint of improving the safety of vehicles, there have hitherto been made various investigations in order to improve braking performance, driving performance, and so on of a tire on not only dry road surfaces but also various road surfaces, such as wet road surfaces and icy and snowy road surfaces. For example, in order to improve on-ice performance, a winter tire, such as a studless tire, is provided with a foamed rubber layer in a tire tread section.
More specifically, for example, as compared with the conventional technology, in order to provide a pneumatic tire further increasing a water removing effect and sharply improving on-ice performance, it is disclosed that a pneumatic tire provided with a foamed rubber layer on the face of a tire tread at least practically kept in contact with the road surface is configured such that the foamed rubber layer has closed cells having an average diameter of 40 to 50 μm and a foaming ratio of 10 to 25% and contains 1 to 15 parts by weight of short fibers based on 100 parts by weight of the rubber component; and that the short fibers have a length of 0.5 to 5.0 mm and an average diameter of 40 to 50 μm and have a heat shrinkage ratio at 170°C of 8% or less (see, for example, PTL 1).

Citation List

Patent Literature

PTL 1: JP-A 10-24704
JP2012219245 discloses a composition for a tire that exhibits good drainage performance, and a good balance between performance on ice and wear resistance.

SUMMARY OF INVENTION

TECHNICAL PROBLEM

However, the cells formed through foaming involved such a problem that the water removing effect is not sufficient.
An object of the present invention is to provide a rubber composition from which a vulcanized rubber having a large water absorbing force can be obtained, a vulcanized rubber having a large water absorbing force, a tire which is excellent in on-ice performance, and a studless which is excellent in on-ice performance, and a problem of the present invention is to solve the foregoing object.

SOLUTION TO PROBLEM

<1> A rubber composition containing a rubber component and a short fibrous resin having a ratio A/B of 1.5 or larger, wherein A is a length of a cross section perpendicular to a long axis direction in a long diameter direction thereof and B is a length of the cross section perpendicular to the long axis direction in a short diameter direction thereof, wherein the short fibrous resin is a complex resin comprising a hydrophilic resin and a coat layer coating the hydrophilic resin, wherein the coat layer is composed of a resin having an affinity with the rubber component, and wherein the resin having an affinity with the rubber component is a low-melting point resin having a melting point lower than a maximum vulcanization temperature of the rubber composition, and the low-melting point resin is a polyolefin-based resin.
<2> The rubber composition as set forth in <1>, further containing a foaming agent.
<3> The rubber composition as set forth in <1> or <2>, wherein the hydrophilic resin contains at least one selected from an oxygen atom, a nitrogen atom, and a sulfur atom.
<4> The rubber composition as set forth in any one of <1> to <3>, wherein the ratio A/B of the short fibrous resin is 10 or less.
<5> The rubber composition as set forth in any one of <1> to <4>, wherein an average length of the short fibrous resin in a longitudinal direction is from 0.1 to 500 mm.

<6> The rubber composition as set forth in any one of <1> to <5>, wherein the content of the short fibrous resin is from 0.1 to 100 parts by mass based on 100 parts by mass of the rubber component.

<7> The rubber composition as set forth in any one of <1> to <6>, wherein an average area of the cross section of the short fibrous resin is from 0.000001 to 0.5 mm$^2$.

<8> The rubber composition as set forth in any one of <1> to <7>, wherein the hydrophilic resin contains at least one substituent selected from the group consisting of -OH, -COOH, -OCOR (where R is an alkyl group), -NH$_2$, -NCO, and -SH.

<9> The rubber composition as set forth in any one of <1> to <8>, wherein the hydrophilic resin contains at least one selected from the group consisting of an ethylene-vinyl alcohol copolymer, a vinyl alcohol homopolymer, a poly(meth)acrylic acid resin, a polyamide resin, an aliphatic polyamide-based resin, an aromatic polyamide-based resin, a polyester resin, a polyolefin resin, a polyvinyl alcohol-based resin, and an acrylic resin.

<10> The rubber composition as set forth in <1> to <9>, wherein the polyolefin-based resin contains at least one selected from the group consisting of a polyethylene-based resin, a polypropylene-based resin, a polyolefin ionomer, and a maleic anhydride-modified $\alpha$-polyolefin.

<11> The rubber composition as set forth in any one of <1> to <10>, which is a rubber composition for tread.

<12> A vulcanized rubber obtained by vulcanizing the rubber composition as set forth in any one of <1> to <11>.

<13> The vulcanized rubber as set forth in <12>, having a flat void having a ratio M/N of larger than 1, wherein M is a length of a cross section perpendicular to a long axis direction in a long diameter direction thereof and N is a length of the cross section perpendicular to the long axis direction in a short diameter direction thereof, with a proportion of the flat void being half the number or more of all voids.

<14> The vulcanized rubber as set forth in <12> or <13>, wherein at least a part of a wall face of the void is hydrophilized.

<15> A tire including the vulcanized rubber as set forth in any one of <12> to <14>.

<16> A studless tire including the vulcanized rubber as set forth in any one of <12> to <14>.

ADVANTAGEOUS EFFECTS OF INVENTION

In accordance with the present invention, a rubber composition from which a vulcanized rubber having a large water absorbing force can be obtained, a vulcanized rubber having a large water absorbing force, a tire which is excellent in on-ice performance, and a studless which is excellent in on-ice performance can be provided.

BRIEF DESCRIPTION OF DRAWINGS

Fig. 1 is a schematic view illustrating a short fibrous resin to be contained in a rubber composition of the present invention.

Fig. 2 is a schematic view illustrating shapes of a short fibrous resin to be contained in a rubber composition of the present invention and a conventional short fibrous resin, and a cross-sectional shape of a void originated from each of these resins.

Fig. 3 is a longitudinal cross-sectional view of a die to be installed in a twin-screw extruder.

Fig. 4 is a longitudinal cross-sectional view of a die to be installed in a twin-screw extruder.

Fig. 5 is a schematic view illustrating a cross-sectional shape of a void originated from a short fibrous resin.

Fig. 6 is a schematic view illustrating a cross-sectional shape of an irregular void originated from a complexed short fibrous resin.

DESCRIPTION OF EMBODIMENTS

<Rubber Composition>

The rubber composition of the present invention contains a rubber component and a short fibrous resin having a ratio A/B of 1.5 or larger, wherein A is a length of a cross section perpendicular to a long axis direction in a long diameter direction thereof and B is a length of the cross section perpendicular to the long axis direction in a short diameter direction thereof.

The rubber composition of the present invention is an unvulcanized rubber composition before vulcanization, and the vulcanized rubber is obtained by vulcanizing the rubber composition of the present invention.

The "short fibrous resin having a ratio A/B of 1.5 or larger, wherein A is a length of a cross section perpendicular to a long axis direction in a long diameter direction thereof and B is a length of the cross section perpendicular to the long axis direction in a short diameter direction thereof" is occasionally referred to as "flat resin".

In the case where the rubber composition contains the rubber component and the flat resin, the vulcanized rubber obtained by vulcanizing the rubber composition becomes large in terms of a water absorbing force.

First of all, geometrical features of the flat resin and reasons why when the rubber composition of the present invention contains the flat resin, the water absorbing force of the vulcanized rubber becomes large are described.

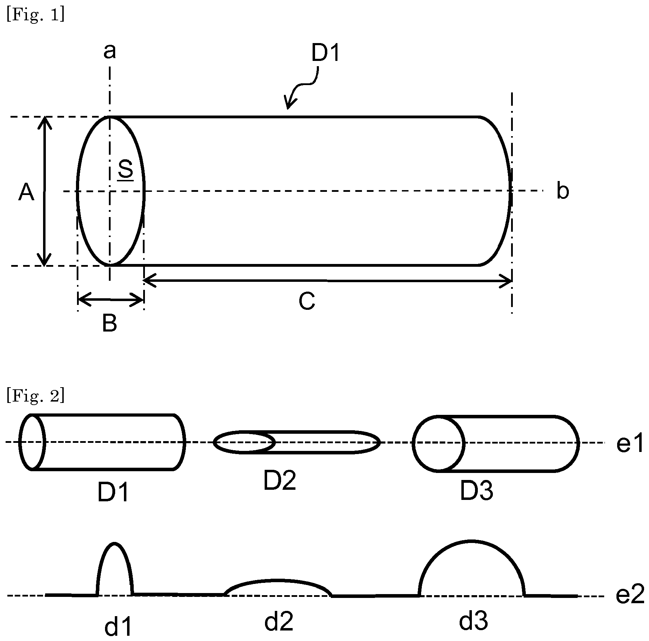

Fig. 1 is a schematic view illustrating an example of the short fibrous resin to be contained in the rubber composition of the present invention.

Fig. 1 illustrates a resin D1 (flat resin) in an elliptic cylindrical form. The resin D1 has a cross section S perpendicular to a long axis direction b, and a distance of a long diameter direction a having a longest diameter in the cross section S is referred to as a length A. In addition, in the cross section S, a distance of the cross section S in a short diameter direction perpendicular to the long diameter direction a is referred to as a length B.

In the case where the length A of the long diameter of the cross section S to the length B of the short diameter of the cross section S, namely A/B, is larger than 1, the cross section S becomes elliptical. Although Fig. 1 illustrates one whose cross-sectional shape is elliptical, so far as A/B is larger than 1, the cross-sectional shape is not particularly limited and may be any of elliptical, rectangular, polygonal, and irregular shapes.

With respect to resins conventionally used as a short fiber, an aspect ratio of the resin itself, namely, with respect to the resin D1, a ratio C/A of a length C in the long axis direction b (length of the short fibrous resin in the longitudinal direction) to the length A of the long diameter of the cross section S, has been studied. However, in the present invention, attention is paid to the ratio A/B of the length A of the long diameter to the length B of the short diameter in the cross section S.

Details of a preparation method of the rubber composition are mentioned later. However, when the rubber component and the flat resin are kneaded, the flat resin in the rubber composition is randomly oriented, and the long axis direction b of the short fibrous resin D1 is oriented perpendicular to the surface of the vulcanized rubber, or the long axis direction b of the short fibrous resin D1 is oriented parallel to the surface of the vulcanized rubber.

In view of the fact that the short fibrous resin D1 has a flat shape, even in the case where the long axis direction b of the short fibrous resin D1 is oriented parallel to the surface of the vulcanized rubber, it may be considered that the long diameter direction a of the cross sectional S is oriented perpendicular to the surface of the vulcanized rubber, or oriented parallel to the surface of the vulcanized rubber.

Such an oriented state of the short fibrous resin D1 can be confirmed through observation of the cut surface obtained by cutting the vulcanized rubber by using an optical microscope.

In the case where such a short fibrous resin having a flat shape is contained in the rubber composition together with the rubber component, in the vulcanized rubber and the tire obtained by vulcanizing the rubber composition, the flat resin is readily contained, or a void originated from the flat resin is readily generated. For example, by using, as the short fibrous resin, a resin having a melting point lower than the vulcanization temperature of the rubber composition, the short fibrous resin is melted owing to vulcanization of the rubber composition, whereby a void originated from the resin is readily generated in the vulcanized rubber. In addition, when the vulcanized rubber is rubbed by the road surface or the like, the short fibrous resin occasionally peels off from the vulcanized rubber, thereby generating a void.

Now, occurrence of skidding of the tire on the frozen road surface is mainly caused due to generation of a film of water between an ice on the road surface and the tire.

The void generated when the short fibrous resin is melted or peels off becomes a waterway on the tire surface (particularly the tread surface), and the water film on the road surface is taken into the void. As a result, the tire surface comes into intimate contact with the icy road surface, thereby enabling skidding to be suppressed.

In the case where the short fibrous resin is oriented on the surface of the vulcanized rubber such that the long axis direction thereof becomes perpendicular to the surface of the vulcanized rubber, in other words, a pillar is erected on the ground, and a void is generated, even when the cross-sectional shape orthogonal to the long axis direction of the short fibrous resin is either perfectly circular or elliptical, the depth of the void is longer than the size of the width, and therefore, it may be considered that water absorption is readily caused due to a capillary phenomenon.

On the other hand, in the case where the short fibrous resin is oriented on the surface of the vulcanized rubber such that the long axis direction thereof becomes parallel to the surface of the vulcanized rubber, in other words, a pillar lies on the ground, it may be considered that the water absorbing force varies with the cross-sectional shape orthogonal to the long axis direction of the short fibrous resin.

Fig. 2 is a schematic view illustrating shapes of a short fibrous resin to be contained in the rubber composition of the present invention and the conventional short fibrous resin, and the cross-sectional shape of the void originated from each of these short fibrous resins.

Fig. 2 illustrates shapes of short fibrous resins D1, D2, and D3 before being incorporated into the rubber composition, and voids d1, d2, and d3 originated from the short fibrous resins D1, D2, and D3. The voids d1, d2, and d3 are each a void generated on a cut surface e2 of the vulcanized rubber obtained by mixing each of the short fibrous resins D1, D2, and D3 in the rubber composition and vulcanizing the mixture, followed by cutting. All of the short fibrous resins D1, D2, and D3 are those oriented such that a long axis direction e1 of each of the short fibrous resins D1, D2, and D3 is parallel to the cut surface e2 of the vulcanized rubber. In addition, the shapes of the voids d1, d2, and d3 illustrated in Fig. 2 are cross-sectional shapes obtained by cutting the voids originated from the short fibrous resins D1, D2, and D3, respectively in a direction orthogonal to the long axis direction e1.

In Fig. 2, the short fibrous resins D1 and D2 are a short fibrous resin (flat resin) in the present invention, and D3 is a resin of a short fiber contained in the conventional rubber composition.

The resin of the short fiber contained in the conventional rubber composition had a perfectly circular cross-sectional shape, and therefore, in the case where the resin D3 is oriented such that the long axis direction e1 is parallel to the vulcanized rubber surface, the cross-sectional shape of the void did not alter.

In contrast, the short fibrous resin to be used in the present invention has a flat shape, and therefore, the long diameter direction of the cross section is oriented perpendicular to the cut surface e2 of the vulcanized rubber as in the short fibrous resin D1, or oriented parallel to the cut surface e2 of the vulcanized rubber as in the short fibrous resin D2.

In the short fibrous resin in which the long diameter direction of the cross section is oriented perpendicular to the cut surface e2 of the vulcanized rubber as in the short fibrous resin D1, when forming a void, the depth of the void readily becomes long relative to the width of the void. In the void d1, a water absorbing action due to a capillary phenomenon acts, whereby the water absorbing force is improved as compared with that in the conventional void d3.

In the short fibrous resin in which the long diameter direction of the cross section is oriented parallel to the cut surface e2 of the vulcanized rubber as in the short fibrous resin D2, when forming a void, the depth of the void short relative to the width of the void, and it may be considered that the capillary phenomenon as in the void d1 does not act. However, it may be considered that the void 2 functions as a waterway the same as in the conventional void d3.

In the light of the above, in the vulcanized rubber and the tire obtained by vulcanizing the rubber composition of the present invention, a void having a long depth relative to the width of the void as in the void d1 is formed on the vulcanized rubber surface or the tire surface, and therefore, it may be considered that the water absorbing force is larger than that in the conventional vulcanized rubber and tire. Accordingly, in the tire and the studless tire produced using the rubber composition of the present invention, it may be considered that a spring water absorbing force on the ice is improved owing to the capillary phenomenon, whereby the on-ice performance is improved.

The rubber composition, the vulcanized rubber, and the tire of the present invention are hereunder described in detail.

Description will be made while omitting symbols in the drawings unless otherwise indicated.

[Rubber Component]

The rubber component to be used for the rubber composition of the present invention is not particularly limited, and besides a natural rubber (NR), synthetic rubbers, such as a polyisoprene rubber (IR), a styrene-butadiene copolymer rubber (SBR), a polybutadiene rubber (BR), an ethylene-propylene-diene rubber (EPDM), a chloroprene rubber (CR), a butyl halide rubber, and an acrylonitrile-butadiene rubber (NBR), can be used. Above all, a natural rubber (NR), a styrene-butadiene copolymer rubber (SBR), and a polybutadiene rubber (BR) are preferred. These rubber components may be used alone or may be used in combination of two or more thereof.

[Short Fibrous Resin]

The rubber composition of the present invention contains a short fibrous resin having a ratio A/B of 1.5 or larger, wherein A is a length of a cross section perpendicular to a long axis direction in a long diameter direction thereof and B is a length of the cross section perpendicular to the long axis direction in a short diameter direction thereof.

In the short fibrous resin (flat resin) in the present invention, so far as A/B is 1.5 or larger, the shape and the area of the cross section perpendicular to the long axis direction (cross section S in Fig. 1) and the length of the long axis direction (length C in Fig. 1) are not particularly limited. From the viewpoint of improving the water absorbing force of the vulcanized rubber, the flat resin is short fibrous.

Specifically, the area of the cross section perpendicular to the long axis direction of the flat resin (section S in Fig. 1) is preferably 0.000001 to 0.5 mm$^2$, and more preferably 0.00002 to 0.2 mm$^2$ in terms of an average area from the viewpoint of more improving the water absorbing force of the vulcanized rubber.

Although the shape of the cross section perpendicular to the long axis direction of the flat resin (section S in Fig. 1) may be any of elliptical, triangular, rectangular, polygonal, and irregular shapes, from the viewpoint of improving the water absorbing force of the vulcanized rubber, it is preferably elliptical or rectangular, and more preferably elliptical.

An average length of the length of the flat resin in the long axis direction (length C in Fig. 1) (average length of the short fibrous resin in the longitudinal direction) is preferably 0.1 to 500 mm, and more preferably 0.1 to 7 mm.

When the cross-sectional area and the length in the long axis direction of the flat resin fall within the aforementioned ranges, not only the water absorbing force of the vulcanized rubber is improved, but also the short fibrous resins are hardly tangled with each other more than necessary and are readily dispersed favorably within the rubber composition.

The average area of the cross section perpendicular to the long axis direction of the flat resin (section S in Fig. 1) and the average length of the flat resin in the long axis direction (length C in Fig. 1) are each an average value of 100 resins as randomly selected. In addition, the length A, the length B, and the length C of the flat resin can be each measured by observing the resin using an optical microscope of 20 to 400 magnifications.

From the viewpoint of more increasing the water absorbing force of the vulcanized rubber, A/B is preferably 2.0 or larger. Although an upper limit of A/B is not particularly limited, in resins of a short fiber having the aforementioned preferred cross-sectional area, it is difficult to produce a resin whose A/B is larger than 10. In consequence, A/B is preferably 10 or lower, and from the viewpoint of more increasing the water absorbing force of the vulcanized rubber, A/B is more preferably 5 or lower.

From the viewpoint of more increasing the water absorbing force of the vulcanized rubber, the length A of the flat resin is preferably 0.001 to 2 mm, and more preferably 0.005 to 0.5 mm in terms of an average value of the 100 resins.

C/A that is a ratio of the length in the long axis direction of the flat resin (length C in Fig. 1) to the length A of the long diameter of the cross section of the flat resin is typically 10 to 4,000, and preferably 50 to 2,000.

From the viewpoint of increasing the water absorbing force of the vulcanized rubber and enhancing favorable water draining performance owing to the formed void, the content of the flat resin in the rubber composition of the present invention is preferably 0.1 parts by mass or more based on 100 parts by mass of the rubber component, and from the viewpoint of keeping durability of the vulcanized rubber, it is preferably 100 parts by mass or less. Furthermore, from the same viewpoints, the content of the flat resin is more preferably 0.1 to 50 parts by mass based on 100 parts by mass of the rubber component.

(Complex Resin)

The flat resin is a complex resin comprising a hydrophilic resin and a coat layer coating the hydrophilic resin, wherein the coat layer is composed of a resin having an affinity with the rubber component. Namely, it is preferred that the flat resin is a complex resin including a hydrophilic resin serving as a core material and a coat layer coating the hydrophilic resin as the core material, the coat layer being composed of a resin having an affinity with the rubber component.

In the case where the flat resin has such a configuration, it may be considered that the flat resin is readily dispersed in the rubber composition and attaches in a film-like form to a part or the whole of a wall face of the flat resin -originated void formed in the vulcanized rubber. Accordingly, at least a part of the wall face of the void is readily hydrophilized. As a result, it may be considered that water readily enter the void, whereby the water absorbing force owing to the capillary phenomenon becomes much larger.

As mentioned previously, the void of the vulcanized rubber is generated when the resin having a melting point lower than the vulcanization temperature of the rubber composition is used as the flat resin (short fibrous resin), and the flat resin is melted by means of vulcanization of the rubber composition, or when the vulcanized rubber is rubbed by the road surface or the like, and the flat resin peels off from the vulcanized rubber. As for the void generated when the vulcanized rubber is rubbed by the road surface or the like, and the flat resin peels off from the vulcanized rubber, in view of the fact that the wall face of the void is hardly hydrophilized, the voids of the vulcanized rubber and the tire are preferably a void generated when the complex resin in which the flat resin contains a hydrophilic resin is melted.

The hydrophilic resin and the resin having an affinity with the rubber component are hereunder described.

[Hydrophilic Resin]

The hydrophilic resin indicates a resin having a contact angle against water of 5 to 80°.

The contact angle against water of the hydrophilic resin can be determined by preparing a test piece which is obtained by molding the hydrophilic resin in a smooth plate-like form; using an automated contact angle meter DM-301, manufactured by Kyowa Interface Science Co., Ltd.; dropping water on the surface of the test piece under a condition at 25°C and a relative humidity of 55%; and immediately thereafter, when observed right sideways, measuring an angle formed by a straight line of the test piece surface and a tangential line of the waterdrop surface.

As the hydrophilic resin, there is exemplified a resin having a hydrophilic group in a molecule thereof. Specifically, a resin containing at least one selected from an oxygen atom, a nitrogen atom, and a sulfur atom is preferred. For example, a resin containing at least one substituent selected from the group consisting of -OH, -COOH, -OCOR (where R is an alkyl group), $-NH_2$, -NCO, and -SH is exemplified. Of these substituents, -OH, -COOH, - OCOR, $-NH_2$, and -NCO are preferred.

As mentioned above, although it is preferred that the hydrophilic resin has a small contact angle against water and has hydrophilicity with water, the hydrophilic resin is preferably insoluble in water.

In the case where the hydrophilic resin is insoluble in water, when water attaches to the vulcanized rubber surface and the tire surface, melting of the hydrophilic resin into water can be prevented from occurring, and the water absorbing force of the void originated from the flat resin can be kept.

As such a hydrophilic resin which is large in the contact angle against water, and on the other hand, is insoluble in water, more specifically, there are exemplified an ethylene-vinyl alcohol copolymer, a vinyl alcohol homopolymer, a poly(meth)acrylic acid resin or an ester resin thereof, a polyamide resin, a polyethylene glycol resin, a carboxy vinyl copolymer, a styrene-maleic acid copolymer, a polyvinylpyrrolidone resin, a vinylpyrrolidone-vinyl acetate copolymer, and mercapto ethanol.

Above all, at least one selected from the group consisting of an ethylene-vinyl alcohol copolymer, a vinyl alcohol homopolymer, a poly(meth)acrylic acid resin, a polyamide resin, an aliphatic polyamide-based resin, an aromatic polyamide-based resin, a polyester resin, a polyolefin resin, a polyvinyl alcohol-based resin, and an acrylic resin is preferred, and an ethylene-vinyl alcohol copolymer is more preferred.

[Resin Having Affinity with Rubber Component]

The resin having an affinity with the rubber component indicates a resin having a solubility parameter (SP value) close to the SP value of the rubber component to be contained in the rubber composition. The closer the mutual SP values, the higher the affinity is, and the both are readily compatibilized with each other.

As for a SP value difference, a difference between the SP value (SP1) of the rubber component and the SP value (SP2) of the resin (ISP1 - SP21) is preferably 2.0 MPa$^{1/2}$ or less.

The SP value of each of the rubber component and the resin can be calculated according to the Fedors method.

The resin having an affinity with the rubber component is preferably a low-melting point resin having a melting point lower than a maximum vulcanization temperature of the rubber composition.

In the case where the flat resin includes such a coat layer, a favorable affinity with the rubber component in the vicinity of the complex resin can be exhibited while effectively keeping an affinity with water which the hydrophilic resin itself has.

In the case where the flat resin includes the coat layer, when the rubber composition contains a foaming agent, the hydrophilic resin which is hardly melted during vulcanization is complemented, whereby formation of the void originated from the complex resin can be promoted. That is, when the vulcanized rubber is formed by ensuring favorable dispersion of the complex resin in the rubber composition, while thoroughly exhibiting a water draining effect to be caused due to the hydrophilic resin, a function as a water draining groove owing to the void originated from the complex resin can be thoroughly exhibited.

In the case where the low-melting point resin is melted during vulcanization of the rubber composition, the coat layer born with fluidity is formed and contributes to adhesion between the rubber and the complex resin, whereby a tire imparted with favorable water draining performance and durability can be easily realized.

Although the thickness of the coat layer is variable with the content of the hydrophilic resin in the rubber composition, the average diameter of the complex resin, and so on, it is typically 0.001 to 10 $\mu$m, and preferably 0.001 to 5 $\mu$m. In the case where the coat layer has a thickness falling within the aforementioned range, a synergistic effect between the void resulting from hydrophilization of the wall face and the capillary phenomenon is readily obtained.

The coat layer of the complex resin may be formed over the entire surface of the hydrophilic resin or may be formed on a part of the surface of the hydrophilic resin. Specifically, the coat layer is preferably formed in a proportion occupying at least 50% of the entire surface area of the complex resin.

The low-melting point resin is a resin having a melting point lower than a maximum vulcanization temperature of the rubber composition, and the maximum vulcanization temperature means a maximum temperature which the rubber composition reaches during vulcanization of the rubber composition. For example, in the case of mold vulcanization, a maximum temperature which the rubber composition reaches during a time when the rubber composition enters a mold and comes out for cooling from the mold is meant. Such a maximum vulcanization temperature can be, for example, measured by embedding a thermocouple in the rubber composition, or the like.

Although an upper limit of the melting point of the low-melting point resin is not particularly limited, it is preferably selected taking into consideration the foregoing points. In general, the melting point of the low-melting point resin is preferably lower by 10°C or more, and more preferably lower by 20°C or more than the maximum vulcanization temperature of the rubber composition. Although an industrial vulcanization temperature of the rubber composition is generally about 190°C at maximum, for example, in the case where the vulcanization maximum temperature is set to 190°C, the melting point of the low-melting point resin is typically selected within a range of 190°C or lower, and it is preferably 180°C or lower, and more preferably 170°C or lower.

The melting point of the flat resin can be measured using a melting point measuring apparatus that is known by itself, or the like, and for example, a melting peak temperature as measured using a differential scanning calorimetry (DSC measurement) apparatus can be adopted as the melting point.

Specifically, the low-melting point resin is preferably a resin in which the amount of a polar component is 50% by mass or less relative to all of the components in the low-melting point resin, and is a polyolefin-based resin. In the case where the low-melting point resin is a resin in which the amount of a polar component falls within the aforementioned range relative to all of the components, the foregoing the low-melting point resin not only has an appropriate difference in the SP value from the rubber component but also has a melting point appropriately lower than the maximum vulcanization temperature, and a favorable affinity with the rubber component can be sufficiently ensured. Furthermore, in the case where the rubber composition contains a foaming agent, the coat layer is easily melted during vulcanization, whereby foaming of the vulcanized rubber can be promoted.

In consequence, the void originated from the complex resin is readily formed while improving dispersibility of the complex resin in the rubber composition.

The aforementioned polyolefin-based resin may be either branched or linear, or the like. In addition, the polyolefin-based resin may also be an ionomer resin composed of an ethylene-methacrylic acid copolymer crosslinked intermolecularly with a metal ion. Specifically, examples thereof include polyethylene, polypropylene, polybutene, polystyrene, an ethylene-propylene copolymer, an ethylene-methacrylic acid copolymer, an ethylene-ethyl acrylate copolymer, an ethylene/propylene/diene terpolymer, an ethylene/vinyl acetate copolymer, and ionomer resins thereof. The polyolefin-based resin may also be a modified resin having been modified with maleic anhydride or the like. These may be used alone or may be used in combination of two or more thereof.

Above all, the polyolefin-based resin as the low-melting point resin preferably includes at least one selected from the group consisting of a polyethylene-based resin, a polypropylene-based resin, a polyolefin ionomer, and a maleic anhydride-modified $\alpha$-polyolefin.

In order to produce the complex resin composed of the hydrophilic resin coated with a coat layer formed of a low-melting point resin, a method in which the low-melting point resin and the hydrophilic resin are blended using a mixing mill, the blend is subjected to melt spinning to form unstretched yarns, and the unstretched yarns are formed in a fibrous state while heat stretching can be adopted.

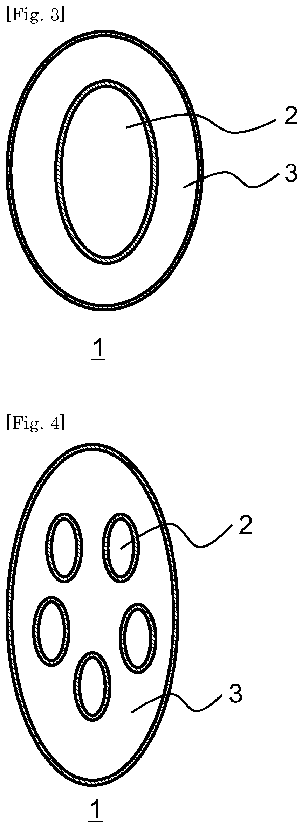

A method in which the low-melting point resin and the hydrophilic resin are blended using two twin-screw extruders provided with a die 1 as illustrated in Fig. 3 or 4, followed by forming in a fibrous state in the same manner, may also be adopted. In this case, the hydrophilic resin and the low-melting point resin are simultaneously extruded from a die outlet 2 and a die outlet 3, respectively, from which are then formed unstretched yarns.

Although the charge amount of each of the low-melting point resin and the hydrophilic resin into a mixing mill or a hopper is variable with the length of the resulting complex resin (length C in Fig. 1), the cross-sectional area, and so on, the charge amount of the low-melting point resin is 5 to 300 parts by mass, and preferably 10 to 150 parts by mass based on 100 parts by mass of the hydrophilic resin.

In the case where the low-melting point resin and the hydrophilic resin are charged in the amounts falling within the aforementioned ranges into a mixing mill or a hopper, the coat layer is readily formed on the surface of the hydrophilic resin.

[Foaming agent]

Preferably, the rubber composition of the present invention further contains a foaming agent.

In the case where the rubber composition contains the foaming agent, cells are generated in the vulcanized rubber owing to the foaming agent, so that the vulcanized rubber can be formed in a foamed rubber. The foamed rubber has flexibility, and therefore, the tire surface using the vulcanized rubber is easy to come into intimate contact with the icy road surface. In addition, in the case where a cell-originated void is generated by the cells on the vulcanized rubber surface and the tire surface, the void functions as a waterway for draining off water.

Furthermore, by invading a gas generated by the foaming agent into the interior of the hydrophilic resin via the coat layer composed of a molten low-melting point resin, a void having a shape linked to the shape of the complex resin, namely a longitudinal shape, can be readily formed. In the case where the void having such a shape linked to the shape of the complex resin exists in the rubber, the water absorbing force of the vulcanized rubber is improved, and the tire is excellent in the on-ice performance.

Specifically, examples of the foaming agent include azodicarbonamide (ADCA), dinitrosopentamethylenetetramine (DPT), dinitrosopentastyrenetetramine, a benzenesulfonylhydrazide derivative, p,p'-oxybisbenzenesulfonylhydrazide (OBSH), ammonium bicarbonate capable of generating carbon dioxide, sodium bicarbonate, ammonium carbonate, a nitrososulfonylazo compound capable of generating nitrogen, N,N'-dimethyl-N,N'-dinitrosophthalamide, toluenesulfonylhydrazide, p-toluenesulfonylsemicarbazide, and p,p'-oxybisbenzenesulfonylsemicarbazide. Above all, from the viewpoint of production processability, azodicarbonamide (ADCA) and dinitrosopentamethylenetetramine (DPT) are preferred. These foaming agents may be used alone or may be used in combination of two or more thereof.

Although the content of the foaming agent in the rubber composition is not particularly limited, it is preferably in a range of from 0.1 to 20 parts by mass based on 100 parts by mass of the rubber compound.

The foaming agent may be contained in the complex resin.

In the case of using a foaming agent for the purpose of foaming the vulcanized rubber, it is preferred to jointly use, as a foaming auxiliary, urea, zinc stearate, zinc benzenesulfinate, zinc oxide, or the like. These may be used alone or may be used in combination of two or more thereof. By jointly using the foaming auxiliary, the foaming reaction is promoted to increase the degree of perfection of the reaction, whereby unnecessary deterioration with time can be suppressed.

In the vulcanized rubber obtained after vulcanizing the rubber composition containing a foaming agent, the foaming ratio is typically 1 to 50%, and preferably 5 to 40%. In the case of mixing the foaming agent, when the foaming ratio is excessively large, the void of the rubber surface becomes large, so that there is a concern that a sufficient ground contact area cannot be ensured. However, so far as the foaming ratio falls within the aforementioned range, the amount of cells can be appropriately kept while ensuring formation of cells effectively functioning as the water draining groove, and therefore, durability is hardly impaired. Here, the foaming ratio of the vulcanized rubber means an average foaming ratio Vs, and specifically, it means a value calculated according to the following formula (I).

$$Vs = (\rho_0/\rho_1 - 1) \times 100\ (\%) \qquad (I)$$

In the formula (I), $\rho_1$ represents a density (g/cm$^3$) of the vulcanized rubber (foamed rubber), and $\rho_0$ represents a density (g/cm$^3$) of the solid phase section in the vulcanized rubber (foamed rubber).

The foaming ratio determined according to the formula (I) is a voidage including not only voids of cells generated through foaming of the foaming agent but also voids generated when the flat resin is melted by vulcanization and voided.

In the rubber composition of the present invention, besides the foaming agent and the foaming auxiliary, if desired, compounding agents which are typically used in the rubber industry, for example, a filler, such as carbon black, a softening agent, stearic acid, an anti-aging agent, zinc oxide, a vulcanization accelerator, a vulcanizer, etc., may be appropriately selected and contained together with the flat resin (preferably the complex resin in which the hydrophilic resin is coated with the coat layer composed of the resin having an affinity with the rubber component) within a range where the purpose of the present invention is not impaired.

The vulcanized rubber obtained from the rubber composition of the present invention has a high water absorbing force, and when used for a tire, the vulcanized rubber is excellent in the spring water absorbing force on the ice. Therefore, the rubber composition of the present invention is suitable for the rubber composition for tread.

<Vulcanized Rubber>

The vulcanized rubber of the present invention is a rubber prepared by vulcanizing the rubber composition of the present invention as mentioned previously.

In consequence, the vulcanized rubber of the present invention has the flat void that is a void originated from the short fibrous resin, having a ratio M/N of larger than 1, wherein M is a length of a cross section perpendicular to a long axis direction in a long diameter direction thereof and N is a length of the cross section perpendicular to the long axis direction in a short diameter direction thereof. In the case where the vulcanized rubber has a flat void having a ratio M/N of larger than 1, it is excellent in the water absorbing force.

Furthermore, from the viewpoint of more improving the water absorbing force, in the vulcanized rubber of the present invention, it is preferred that a proportion of the flat void is half the number or more of all voids.

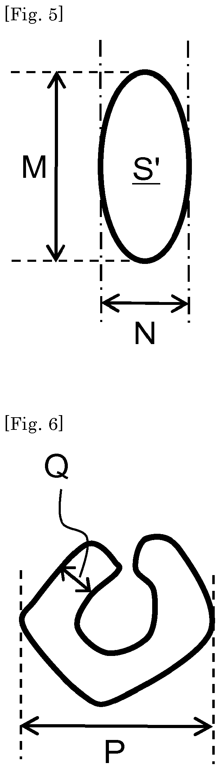

Fig. 5 is a schematic view illustrating a cross-sectional shape of the void originated from the short fibrous resin.

Here, in the Fig. 1 used for explaining the short fibrous resin, when the short fibrous resin is likened as the flat void, the length M is a length corresponding to the length A, and the length N is a length corresponding to the length B. Preferred ranges of the length M, the length N, and the ratio M/N are the same as the preferred ranges of the length A, the length B, and the ratio A/B of the short fibrous resin, respectively.

A preferred range of an area of a cross section S' perpendicular to the long axis direction of the flat void (surface corresponding to the cross section S of the short fibrous resin in Fig. 1) is the same as the preferred range of the area of the cross section S. Although the shape of the foregoing cross section is not limited, it is preferably elliptical. A preferred range of an average length of the length in the long axis direction of the flat void (length corresponding to the length C of the short fibrous resin in Fig. 1) is the same as the preferred range of the length C.

In Fig. 5, in the case where a ratio of the length M of the long diameter of the cross section S' to the length N of the short diameter of the cross section S', namely M/N, is larger than 1, the cross section S' becomes elliptical. The cross section of the void originated from the resin fiber is not limited to the elliptical void originated from the single resin fiber as illustrated in Fig. 5, and it may also be an irregular shape derived from a complex prepared by complexation of plural resin fibers. Specifically, there is exemplified a communicated void generated when two or more resin fibers are superimposed by means of kneading the rubber composition and melted. Fig. 6 is a schematic view illustrating a cross-sectional shape of an irregular void originated from a complexed short fibrous resin. As for the irregular void as illustrated in Fig. 6, when a maximum length of the void is defined as P, and a minimum length in the width of the void is defined as Q, a ratio P/Q of P to Q has only to be larger than 1.

The shape of the void which the vulcanized rubber has can be, for example, confirmed by cutting out a block-shaped sample from the vulcanized rubber, taking a photograph of a cross section of the sample with an optical microscope of 100 to 400 magnifications, and measuring the long axis and the short axis of the void. In addition, a proportion of the flat void may be, for example, calculated by likening, as a matrix, the void observed in three or more different places in a field of vision of 2 mm $\times$ 3 mm by using an optical microscope.

Furthermore, in the vulcanized rubber, it is preferred that at least a part of the wall face of the void is hydrophilized. The void which the vulcanized rubber has is the void originated from the flat resin as mentioned previously, and as explained by reference to Figs. 1 and 2, the void has the water absorbing force owing to a capillary phenomenon. Furthermore, in the case where at least a part of the wall face of the void is hydrophilized, it may be considered that the water absorbing force becomes larger.

<Tire and Studless Tire>

The tire and the studless tire of the present invention include the vulcanized rubber of the present invention.

In consequence, each of the tire and the studless tire of the present invention has a flat void having a ratio M/N of larger than 1, wherein M is a length of a cross section perpendicular to a long axis direction in a long diameter direction thereof and N is a length of the cross section perpendicular to the long axis direction in a short diameter direction thereof. A proportion of the flat void which the tire and the studless tire each have is preferably half the number or more of all voids. In addition, it is preferred that at least a part of the wall face of the void is hydrophilized.

As mentioned previously, since the vulcanized rubber of the present invention has a large water absorbing force, even when a water film is spread on the road surface, water is taken into the tire owing to a capillary phenomenon by the cavity originated from the flat resin formed on the tire surface, whereby skidding can be prevented from occurring. In particular, the vulcanized rubber of the present invention is excellent in the spring water absorbing force on the ice. Therefore, the vulcanized rubber of the present invention is suitable for a studless tire, and the studless tire is excellent in the on-ice performance.

The tire may be obtained by using an unvulcanized rubber composition and after molding, vulcanizing it according to the kind or member of the tire to be applied. Alternatively, the tire may be obtained by performing a preliminary vulcanization process to once obtain a semi-vulcanized rubber from an unvulcanized rubber composition, molding it, and further performing the full-scale vulcanization. Among various members of the tire, from the viewpoint that favorable water draining performance and excellent fracture resistance can be sufficiently exhibited, the vulcanized rubber of the present invention is preferably applied to tread members. As a gas to be filled in the tire, besides usual air or air whose oxygen partial pressure has been regulated, an inert gas, such as nitrogen, argon, and helium, can be used.

Examples

The present invention is hereunder described in more detail by reference to Examples, but it should be construed that these Examples are aimed to exemplify the present invention and do not limit the present invention at all.

<Short Fibrous Resin (Short Fiber)>

1. Resin 1 free from a coat layer and not using a hydrophilic resin

Polyethylene (NOVATEC HJ360 (MFR: 5.5, melting point: 132°C), manufactured by Japan Polyethylene Corporation) was kneaded with a kneading machine, the resin was extruded from a die, and then cut in a length of 3 mm, thereby producing Resin 1 formed of polyethylene.

A ratio A/B of the length A of the cross section to the length B of the cross section of Resin 1 was 1.8. In addition, an average length of the length A was 0.05 mm; an average area of the cross section (cross section S in Fig. 1) was 0.001 mm$^2$; and an average length of the length in the long axis direction (length C in Fig. 1) was 3 mm.

The length A of the cross section, the length B of the cross section, and the length C in the long axis direction of Resin 1 are each a value obtained by photographing Resin 1 with an optical microscope of 20 to 400 magnifications, measuring the length of each of 100 samples, and calculating an arithmetic average value thereof. An aspect ratio (length A/length B) of Resin 1 was calculated from the obtained numerical values. The same is also applicable to Resins 2 to 5 and 101 as mentioned later. The results are shown in Table 2.

2. Resin 2 having a coat layer having a hydrophilic resin as a core material coated thereon (complex resin)

Two twin-screw extruders were used, and 40 parts by mass of polyethylene (NOVATEC HJ360 (MFR: 5.5, melting point: 132°C), manufactured by Japan Polyethylene Corporation) and 40 parts by mass of an ethylene-vinyl alcohol copolymer (EVAL F104B (MFR: 4.4, melting point: 183°C), manufactured by Kuraray Co., Ltd.) were charged in a hopper. The ethylene-vinyl alcohol copolymer and the polyethylene were simultaneously extruded from the die outlet 2 and the die outlet 3, respectively in the configuration illustrated in Fig. 3, and the obtained complex resin was cut in a length of 3 mm according to a conventional method, thereby producing Resin 2 that is a complex resin in which a coat layer formed of polyethylene was formed.

A ratio A/B of the length A of the cross section to the length B of the cross section of Resin 2 was 1.8. In addition, an average length of the length A was 0.05 mm; an average area of the cross section (cross section S in Fig. 1) was 0.001 $mm^2$; and an average length of the length in the long axis direction (length C in Fig. 1) was 3 mm.

3. Resins 3 to 5 each having a coat layer having a hydrophilic resin as a core material coated thereon (complex resins)

Resins 3 to 5 that are each a complex resin were produced in the same manner as in the production of Resin 2 that is a complex resin, except that the long diameter/short diameter of the die outlet 2 and the long diameter/short diameter of the die outlet 3 in the configuration illustrated in Fig. 3 were changed.

A ratio A/B of the length A of the cross section to the length B of the cross section of the resulting Resin 3 was 2.4. In addition, an average length of the length A was 0.05 mm; an average area of the cross section (cross section S in Fig. 1) was 0.0008 $mm^2$; and an average length of the length in the long axis direction (length C in Fig. 1) was 3 mm.

A ratio A/B of the length A of the cross section to the length B of the cross section of the resulting Resin 4 was 2.7. In addition, an average length of the length A was 0.05 mm; an average area of the cross section (cross section S in Fig. 1) was 0.0007 $mm^2$; and an average length of the length in the long axis direction (length C in Fig. 1) was 3 mm.

A ratio A/B of the length A of the cross section to the length B of the cross section of the resulting Resin 5 was 4.6. In addition, an average length of the length A was 0.05 mm; an average area of the cross section (cross section S in Fig. 1) was 0.0004 $mm^2$; and an average length of the length in the long axis direction (length C in Fig. 1) was 3 mm.

4. Resin 101 free from a coat layer and not using a hydrophilic resin

Resin 101 was produced in the same manner as in the production of Resin 1, except that the long diameter/short diameter of the die outlet 2 and the long diameter/short diameter of the die outlet 3 in the configuration illustrated in Fig. 3 were changed.

A ratio A/B of the length A of the cross section to the length B of the cross section of Resin 101 was 1.0. In addition, an average length of the length A was 0.05 mm; an average area of the cross section was 0.002 $mm^2$; and an average length of the length in the long axis direction was 3 mm.

<Preparation of Rubber Composition and Production of Vulcanized Rubber>

[Preparation of Rubber Composition]

Each of Resin 101 and Resins 1 to 5 is used, and the respective components are mixed and kneaded according to the blend shown in Table 1, thereby obtaining rubber compositions of Comparative Example 1, Reference Example 1 and Examples 2 to 5.

[Production of Vulcanized Rubber]

Each of the obtained rubber compositions of the Reference Example, Examples and Comparative Example is vulcanized at a maximum vulcanization temperature of 190°C, thereby obtaining a vulcanized rubber.

<Evaluation>

(1) Foaming Ratio Index

A density $\rho_1$ (g/m$^3$) of a block-shaped sample the same as that when measuring the average foaming diameter is measured, whereas a density $\rho_0$ of a non-foamed rubber (solid phase rubber) is measured, thereby determining a foaming ratio according to the following formula.

$$\text{Foaming ratio V} = (\rho_0/\rho_1 - 1) \times 100\ (\%)$$

The foaming ratio is expressed in terms of an index while defining the foaming ratio of Comparative Example 1 as 100.

(2) Water Absorbing Performance Index

On the ice surface, a vulcanized rubber obtained by further cutting out the obtained vulcanized rubber using a slicer is pressed at 150 N for 30 seconds, and the amount of water absorption is calculated from a difference in mass of the vulcanized rubber before and after the processing. The amount of water absorption is expressed in terms of an index while defining the amount of water absorption of Comparative Example 1 as 100.

(3) On-Ice Performance Index

A vehicle fitted with new test tires produced from the rubber composition of each of the Reference Example, Examples and Comparative Example is travelled on the flat road on ice, and at the point of time when the speed per hour reached 20 km/h, braking is applied to lock the tires, thereby measuring a braking distance until the vehicle reached a stopped state.

The on-ice performance index is expressed in terms of an index while defining a reciprocal of the braking distance of Comparative Example 1 as 100.0. It is indicated that the larger the index value, the more excellent the braking performance on the ice is.

Table 1

| | |
|---|---|
| Natural rubber | 60 |
| Polybutadiene rubber | 40 |
| Carbon black | 60 |
| Stearic acid | 2 |
| Zinc oxide | 6 |
| Vulcanization accelerator | 1.2 |
| Insoluble sulfur | 4 |
| Foaming agent | 4 |
| Resin (short fiber) | 5 |
| (parts by mass) ||

Details of the components in Table 1 are as follows.

Polybutadiene rubber: "BR01", cis-1,4-polybutadiene, manufacture by JSR Corporation

Carbon black: "CARBON N220", manufactured by Asahi Carbon Co., Ltd.

Vulcanization accelerator: "NOCCELER DM", di-2-benzothiazyl disulfide, manufactured by Ouchi Shinko Chemical Industrial Co., Ltd.

Foaming agent: "CELLMIC AN", dinitrosopentamethylenetetramine (DPT), manufactured by Sankyo Kasei Co., Ltd.

Table 2

| | | Comparative Example 1 | Reference Example 1 | Example 2 | Example 3 | Example 4 | Example 5 |
|---|---|---|---|---|---|---|---|
| Resin (short fiber) | Aspect ratio, A/B | 1.0 | 1.8 | 1.8 | 2.4 | 2.7 | 4.6 |
| | Hydrophilic resin | No | No | Yes | Yes | Yes | Yes |
| | Kind of resin | Resin 101 | Resin 1 | Resin 2 | Resin 3 | Resin 4 | Resin 5 |
| Evaluation | Foaming ratio index | 100 | 99 | 99 | 101 | 100 | 100 |
| | Water absorbing performance index | 100 | 109 | 121 | 132 | 138 | 132 |
| | On-ice performance index | 100.0 | 101.0 | 107.8 | 111.3 | 114.5 | 112.6 |

As is noted from Table 2, all of the vulcanized rubbers of the Examples produced using, as a short fibrous resin, a flat resin having an aspect ratio (length A/length B) of 1.5 or larger were larger in the water absorbing force than the vulcanized rubber of the comparative example produced using, as a short fibrous resin, a short fibrous resin having an aspect ratio (A/B) of 1.0, and the tires of the Examples were excellent in the on-ice performance.

A block-shaped sample was cut out from the tread rubber of the test tire produced in the evaluation of on-ice performance index, a photograph of a cross section of the sample was taken with an optical microscope of 100 to 400 magnifications, and the long axes and the short axes of 200 or more voids were measured. As a result, the majority in all of the observed voids was a flat void having a ratio M/N of larger than 1.

In addition, it is noted that the vulcanized rubbers of Examples 2 to 5 produced by using the short fibrous resin that is a complex resin using a hydrophilic resin and coated with a low-melting point resin, the short fibrous resin having an aspect ratio (A/B) of more than 1.5, have more excellent water absorbing force and on-ice performance than those of the vulcanized rubber of Reference Example 1, owing to a synergistic effect between the aspect ratio of the cross section of the flat shape and the wall face of the hydrophilized void.

REFERENCE SIGNS LIST

a: Long axis direction on the cross section perpendicular to the long axis direction of the short fibrous resin
b: Long axis direction of the short fibrous resin
S: Cross section perpendicular to the long axis direction of the short fibrous resin
A: Length of the cross section of the long diameter direction in the cross section perpendicular to the long axis direction of the short fibrous resin
B: Length of the cross section of the short diameter direction perpendicular to the long diameter direction in the cross section perpendicular to the long axis direction
C: Length of the long axis direction of the short fibrous resin
D 1: Short fibrous resin in the present invention
D2: Short fibrous resin in the present invention
D3: Conventional short fibrous resin
d1: Cross-sectional shape of the void originated from the short fibrous resin D1
d2: Cross-sectional shape of the void originated from the short fibrous resin D2
d3: Cross-sectional shape of the void originated from the short fibrous resin D3
e1: Long axis direction of the short fibrous resins D1, D2, and D3
e2: Cut surface of the vulcanized rubber
M: Length of the cross section of the long diameter direction in the cross section perpendicular to the long axis direction in the void originated from the short fibrous resin
N: Length of the cross section of the short diameter direction perpendicular to the long diameter direction in the void originated from the short fibrous resin
S': Cross section perpendicular to the long axis direction of the flat void in the void originated from the short fibrous resin
P: Maximum length of the irregular void originated from the complexed short fibrous resin
Q: Minimum length in the width of the irregular void originated from the complexed short fibrous resin

1: Die of twin-screw extruder
2: Die outlet for hydrophilic resin
3: Die outlet for resin having an affinity with the rubber component

**Claims**

1. A rubber composition comprising

   a rubber component and
   a short fibrous resin having a ratio A/B of 1.5 or larger, wherein A is a length of a cross section perpendicular to a long axis direction in a long diameter direction thereof and B is a length of the cross section perpendicular to the long axis direction in a short diameter direction thereof,
   wherein the short fibrous resin is a complex resin comprising a hydrophilic resin and a coat layer coating the hydrophilic resin, wherein the coat layer is composed of a resin having an affinity with the rubber component, wherein the resin having an affinity with the rubber component is a low-melting point resin having a melting point lower than a maximum vulcanization temperature of the rubber composition, and the low-melting point resin is a polyolefin-based resin, and wherein A and B are measured according to the method as disclosed in the present description.

2. The rubber composition according to claim 1, further comprising a foaming agent.

3. The rubber composition according to claim 1 or 2, wherein the hydrophilic resin contains at least one selected from an oxygen atom, a nitrogen atom, and a sulfur atom.

4. The rubber composition according to any one of claims 1 to 3, wherein the ratio A/B of the short fibrous resin is 10 or less.

5. The rubber composition according to any one of claims 1 to 4, wherein an average length of the short fibrous resin in a longitudinal direction is from 0.1 to 500 mm.

6. The rubber composition according to any one of claims 1 to 5, wherein the content of the short fibrous resin is from 0.1 to 100 parts by mass based on 100 parts by mass of the rubber component.

7. The rubber composition according to any one of claims 1 to 6, wherein an average area of the cross section of the short fibrous resin is from 0.000001 to 0.5 $mm^2$.

8. The rubber composition according to any one of claims 1 to 7, wherein the hydrophilic resin contains at least one substituent selected from the group consisting of -OH, -COOH, -OCOR (where R is an alkyl group), $-NH_2$, -NCO, and -SH.

9. The rubber composition according to any one of claims 1 to 8, wherein the hydrophilic resin contains at least one selected from the group consisting of an ethylene-vinyl alcohol copolymer, a vinyl alcohol homopolymer, a poly(meth)acrylic acid resin, a polyamide resin, an aliphatic polyamide-based resin, an aromatic polyamide-based resin, a polyester resin, a polyolefin resin, a polyvinyl alcohol-based resin, and an acrylic resin.

10. The rubber composition according to any one of claims 1 to 9, wherein the polyolefin-based resin contains at least one selected from the group consisting of a polyethylene-based resin, a polypropylene-based resin, a polyolefin ionomer, and a maleic anhydride-modified $\alpha$-polyolefin.

11. The rubber composition according to any one of claims 1 to 10, which is a rubber composition for tread.

12. A vulcanized rubber obtained by vulcanizing the rubber composition according to any one of claims 1 to 11.

13. The vulcanized rubber according to claim 12, having a flat void having a ratio M/N of larger than 1, wherein M is a length of a cross section perpendicular to a long axis direction in a long diameter direction thereof and N is a length of the cross section perpendicular to the long axis direction in a short diameter direction thereof, with a proportion of the flat void being half the number or more of all voids.

**14.** The vulcanized rubber according to claim 12 or 13, wherein at least a part of a wall face of the void is hydrophilized.

**15.** A tire comprising the vulcanized rubber according to any one of claims 12 to 14.

**16.** A studless tire comprising the vulcanized rubber according to any one of claims 12 to 14.

**Patentansprüche**

**1.** Kautschukzusammensetzung umfassend

eine Kautschukkomponente und
ein kurzfaseriges Harz, das ein Verhältnis von A/B von 1,5 oder mehr aufweist, wobei A eine Länge eines Querschnitts senkrecht zu einer Längsachsenrichtung in einer Längendurchmesserrichtung davon ist und B eine Länge des Querschnitts senkrecht zu der Längsachsenrichtung in einer kurzen Durchmesserrichtung davon ist,
wobei das kurzfaserige Harz ein Komplexharz ist, das ein hydrophiles Harz und eine Beschichtungsschicht umfasst, die das hydrophile Harz beschichtet, wobei die Beschichtungsschicht aus einem Harz besteht, das eine Affinität mit der Kautschukkomponente aufweist,
wobei das Harz, das eine Affinität mit der Kautschukkomponente aufweist, ein Harz mit einem niedrigen Schmelzpunkt ist, das einen Schmelzpunkt aufweist, der niedriger als eine maximale Vulkanisolationstemperatur der Kautschukzusammensetzung ist und das Harz mit niedrigem Schmelzpunkt ein Harz auf Polyolefinbasis ist und wobei A und B dem Verfahren, wie in der vorliegenden Beschreibung offenbart, entsprechend gemessen sind.

**2.** Kautschukzusammensetzung nach Anspruch 1, ferner ein Schäummittel umfassend.

**3.** Kautschukzusammensetzung nach Anspruch 1 oder 2, wobei das hydrophile Harz mindestens eines enthält ausgewählt unter einem Sauerstoffatom, einem Stickstoffatom und einem Schwefelatom.

**4.** Kautschukzusammensetzung nach einem der Ansprüche 1 bis 3, wobei das Verhältnis von A/B des kurzfaserigen Harzes 10 oder weniger beträgt.

**5.** Kautschukzusammensetzung nach einem der Ansprüche 1 bis 4, wobei eine durchschnittliche Länge des kurzfaserigen Harzes in einer Längsrichtung 0,1 bis 500 mm beträgt.

**6.** Kautschukzusammensetzung nach einem der Ansprüche 1 bis 5, wobei der Gehalt des kurzfaserigen Harzes 0,1 bis 100 Masseteile, auf 100 Masseteile der Kautschukkomponente bezogen, beträgt.

**7.** Kautschukzusammensetzung nach einem der Ansprüche 1 bis 6, wobei eine durchschnittliche Fläche des Querschnitts des kurzfaserigen Harzes 0,000001 bis 0,5 $mm^2$ beträgt.

**8.** Kautschukzusammensetzung nach einem der Ansprüche 1 bis 7, wobei das hydrophile Harz mindestens einen Substituenten enthält, ausgewählt aus der Gruppe bestehend aus -OH, -COOH, -OCOR (wobei R eine Alkylgruppe ist), $-NH_2$, -NCO und -SH.

**9.** Kautschukzusammensetzung nach einem der Ansprüche 1 bis 8, wobei das hydrophile Harz mindestens eines enthält, ausgewählt aus der Gruppe bestehend aus einem Ethylen-Vinylalkohol-Copolymer, einem Vinylalkohol-Homopolymer, einem poly(meth)acrylischen Säureharz, einem Polyamidharz, einem aliphatischen Harz auf Polyamidbasis, einem aromatischen Harz auf Polyamidbasis, einem Polyesterharz, einem Polyolefinharz, einem Harz auf Polyvinylalkoholbasis und einem acrylischen Harz.

**10.** Kautschukzusammensetzung nach einem der Ansprüche 1 bis 9, wobei das Harz auf Polyolefinbasis mindestens eines enthält, ausgewählt aus der Gruppe bestehend aus einem Harz auf Polyethylenbasis, einem Harz auf Polypropylenbasis, einem Polyolefinionomer und einem mit Maleinsäureanhydrid modifizierten $\alpha$-Polyolefin.

**11.** Kautschukzusammensetzung nach einem der Ansprüche 1 bis 10, das eine Kautschukzusammensetzung für Reifenprofil ist.

**12.** Vulkanisierter Kautschuk, durch Vulkanisieren der Kautschukzusammensetzung nach einem der Ansprüche 1 bis 11 erhalten.

**13.** Vulkanisierter Kautschuk nach Anspruch 12, der einen flachen Hohlraum aufweist, der ein Verhältnis von M/N von mehr als 1 aufweist, wobei M eine Länge eines Querschnitts senkrecht zu einer Längsachsenrichtung in einer Längendurchmesserrichtung davon ist und N eine Länge des Querschnitts senkrecht zu der Längsachsenrichtung in einer kurzen Durchmesserrichtung davon ist, wobei ein Verhältnis des flachen Hohlraums die Hälfte der Anzahl oder mehr aller Hohlräume ist.

**14.** Vulkanisierter Kautschuk nach Anspruch 12 oder 13, wobei mindestens ein Teil einer Wandstirn des Hohlraums hydrophilisiert ist.

**15.** Reifen umfassend den vulkanisierten Kautschuk nach einem der Ansprüche 12 bis 14.

**16.** Spikeloser Reifen umfassend den vulkanisierten Kautschuk nach einem der Ansprüche 12 bis 14.

**Revendications**

**1.** Composition de caoutchouc comprenant

un composant caoutchouc et
une résine fibreuse courte ayant un ratio A/B de 1,5 ou supérieur, dans laquelle A est une longueur d'une section transversale perpendiculaire à un sens de l'axe long dans son sens de diamètre long et B est une longueur de la section transversale perpendiculaire au sens de l'axe long dans son sens de diamètre court,
dans laquelle la résine fibreuse courte est une résine complexe comprenant une résine hydrophile et une couche de revêtement enrobant la résine hydrophile, dans laquelle la couche de revêtement est composée d'une résine ayant une affinité avec le composant caoutchouc,
dans laquelle la résine ayant une affinité avec le composant caoutchouc est une résine à point de fusion bas ayant un point de fusion inférieur à une température maximale de vulcanisation de la composition de caoutchouc, et la résine à point de fusion bas est une résine à base de polyoléfine, et dans laquelle A et B sont mesurés selon le procédé tel que décrit dans la présente description.

**2.** Composition de caoutchouc selon la revendication 1, comprenant en outre un agent d'expansion.

**3.** Composition de caoutchouc selon la revendication 1 ou 2, dans laquelle la résine hydrophile contient au moins l'un sélectionné parmi un atome d'oxygène, un atome d'azote, et un atome de soufre.

**4.** Composition de caoutchouc selon l'une quelconque des revendications 1 à 3, dans laquelle le ratio A/B de la résine fibreuse courte est de 10 ou moins.

**5.** Composition de caoutchouc selon l'une quelconque des revendications 1 à 4, dans laquelle une longueur moyenne de la résine fibreuse courte dans un sens longitudinal est de 0,1 à 500 mm.

**6.** Composition de caoutchouc selon l'une quelconque des revendications 1 à 5, dans laquelle la teneur de la résine fibreuse courte est de 0,1 à 100 parties en masse sur la base de 100 parties en masse du composant caoutchouc.

**7.** Composition de caoutchouc selon l'une quelconque des revendications 1 à 6, dans laquelle une surface moyenne de la section transversale de la résine fibreuse courte est de 0,000001 à 0,5 mm$^2$.

**8.** Composition de caoutchouc selon l'une quelconque des revendications 1 à 7, dans laquelle la résine hydrophile contient au moins un substituant sélectionné parmi le groupe constitué de -OH, -COOH, -OCOR (où R est un groupe alkyle), -NH$_2$, -NCO, et -SH.

**9.** Composition de caoutchouc selon l'une quelconque des revendications 1 à 8, dans laquelle la résine hydrophile contient au moins l'un sélectionné parmi le groupe constitué d'un copolymère d'éthylène-alcool de vinyle, d'un homopolymère d'alcool de vinyle, d'une résine d'acide poly(méth)acrylique, d'une résine de polyamide, d'une résine aliphatique à base de polyamide, d'une résine aromatique à base de polyamide, d'une résine de polyester, d'une résine de polyoléfine, d'une résine à base de poly(alcool de vinyle), et d'une résine acrylique.

10. Composition de caoutchouc selon l'une quelconque des revendications 1 à 9, dans laquelle la résine à base de polyoléfine contient au moins l'un sélectionné parmi le groupe constitué d'une résine à base de polyéthylène, d'une résine à base de polypropylène, d'un ionomère de polyoléfine, et d'une $\alpha$-polyoléfine modifiée par un anhydride maléique.

11. Composition de caoutchouc selon l'une quelconque des revendications 1 à 10, qui est une composition de caoutchouc pour bande de roulement.

12. Caoutchouc vulcanisé obtenu par vulcanisation de la composition de caoutchouc selon l'une quelconque des revendications 1 à 11.

13. Caoutchouc vulcanisé selon la revendication 12, ayant un vide plat ayant un ratio M/N supérieur à 1, dans lequel M est une longueur d'une section transversale perpendiculaire à un sens de l'axe long dans son sens de diamètre long et N est une longueur de la section transversale perpendiculaire au sens de l'axe long dans son sens de diamètre court, avec une proportion du vide plat étant la moitié du nombre ou plus de tous les vides.

14. Caoutchouc vulcanisé selon la revendication 12 ou 13, dans lequel au moins une partie d'une face de paroi du vide est hydrophilisée.

15. Pneumatique comprenant le caoutchouc vulcanisé selon l'une quelconque des revendications 12 à 14.

16. Pneumatique sans crampon comprenant le caoutchouc vulcanisé selon l'une quelconque des revendications 12 à 14.

[Fig. 1]

[Fig. 2]

[Fig. 3]

1

[Fig. 4]

1

[Fig. 5]

M

N

S'

[Fig. 6]

Q

P

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10024704 A

- JP 2012219245 B